# EUROPÄISCHE PATENTANMELDUNG

(11) **EP 0 999 187 A1**
(43) Veröffentlichungstag der Anmeldung: **10.05.2000**
(21) Anmeldenummer: 98120881.2
(22) Anmeldetag: 04.11.1998
(51) Int. Cl.: C02F 3/20, B01F 3/04

(54) **Vorrichtung zur Begasung von Feststoff-Flüssigkeitsgemischen und Flüssigkeiten**

(71) Anmelder: Uwatech Umwelt- und Wassertechnik GmbH, 29336 Nienhagen (DE)
(72) Erfinder: Kohlheb, Robert Dr., 29336 Nienhagen (DE)
(74) Vertreter: König, Norbert, Dipl.-Phys. Dr.

(57) **Zusammenfassung**

Eine Vorrichtung zur Begasung von Feststoff-Flüssigkeitsgemischen und Flüssigkeiten, insbesondere von Kläranlagen und Bioreaktoren, weist feinporige Membranen auf, über die Luftblasen in das Feststoff-Flüssigkeitsgemisch oder die Flüssigkeiten eingeführt werden. Um die Begasung zu optimieren und den Energiebedarf zu reduzieren, sind die feinporigen Membranen Schlauch- oder Röhrchenmembranen (12), deren eines Ende (18) verschlossen ist und die aus elastischem, hydrophoben Material bestehen. Die Länge der Schlauch- oder Röhrchenmembranen (12) ist geringer als 100 cm, vorzugsweise geringer als 20 cm. Der Außendurchmesser der Schlauch- oder Röhrchenmembranen (12) beträgt etwa 0,8 mm und der Innendurchmesser etwa 0,5 mm. Der Porendurchmesser der Schlauch- oder Röhrchenmembranen ist kleiner als 3 µm und liegt vorzugsweise im Bereich zwischen 0,1 bis 0,2 µm. Mehrere Schlauch- oder Röhrchenmembranen können zur Bildung eines Begasungsmoduls mit ihrem offenen Ende in Bohrungen (10) des Mantels eines Belüftungsrohres (4) angeordnet sein. Im Funktionszustand ragen die Schlauch- oder Röhrchenmembranen (12) nach oben.

## Beschreibung

Die Erfindung betrifft eine Vorrichtung zur Begasung von Feststoff-Flüssigkeitsgemischen und Flüssigkeiten gemäß Oberbegriff des Anspruchs 1.

Es ist bekannt, flexible Folien, beispielsweise PVC-Folien oder ein Feld von Röhrchen, mit Perforationen zur Erzeugung von kleinen Blasen zwecks Begasung eines Belebtschlamm/Abwassergemisches in Kläranlagen und Bioreaktoren zu verwenden. Die Folien werden von unten und die Röhrchen von innen mit Druckluft beaufschlagt. Über der Folie befindet sich das Belebtschlamm/Abwassergemisch. Die Röhrchen sind im Gemisch angeordnet. Nachteilig ist, daß sich auf der Folie und den Röhrchen Schlamm ablagert, der den Bläschenaustritt behindert und die Perforationen verstopfen kann, so daß unter größerem Energieaufwand mit höherem Luftdruck gefahren werden muß und die Folie und die Röhrchen unter großem Aufwand häufig gereinigt werden müssen. Bei Druckerhöhung dehnt sich das flexible Folienmaterial aus, wodurch die Poren und damit die Bläschen größer werden, was den Nachteil hat, daß eine Luft/Sauerstoffsättigung des Belebtschlamm/Abwassergemisches nur schwer erreichbar ist.

Die Aufgabe der vorliegenden Erfindung besteht darin, eine Vorrichtung zur Begasung von Feststoff-Flüssigkeitsgemischen und Flüssigkeiten anzugeben, mittels der eine optimale Begasung unter Reduzierung des Energiebedarfes erreichbar ist.

Diese Aufgabe wird durch die Erfindung gemäß Anspruch 1 gelöst.

Vorteilhafte und zweckmäßige Weiterbildungen sind in den Unteransprüchen angegeben.

Die Erfindung schlägt zur Begasung kurze Schlauch- oder Röhrchenmembranen vorzugsweise in aufrechter Anordnung aus hydrophobem Material mit einer Porenweite kleiner als 3 µm vor zur Erzeugung von Mikroluftbläsehen. Diese Schlauch- oder Röhrchenmembranen haben den Vorteil, daß sich auf ihnen praktisch kein Schlamm ablagern kann. Sollten Ablagerungen auftreten, platzen diese aufgrund druckbedingter Ausdehnungsänderungen leicht ab. Hierdurch ist gewährleistet, daß Mikrobläschen ungehindert erzeugt werden, wodurch bereits unter Anwendung eines geringen Luftdruckes und damit geringen Energieaufwandes eine optimale Luft/Sauerstoffsättigung im Belebtschlamm/Abwassergemisch und eine optimale Zirkulation des Gemisches erreichbar sind.

Die Erfindung soll nachfolgend anhand der beigefügten Zeichnung, in der ein Ausführungsbeispiel dargestellt ist, näher erläutert werden.

Es zeigt
- Fig. 1: schematisch ein Begasungsmodul in perspektivischer Darstellung,
- Fig. 2: einen Schnitt durch das Begasungsmodul nach Fig. 1 und
- Fig. 3: schematisch ein Segment eines Registers aus mehreren Begasungsmodulen nach Fig. 1 in der Draufsicht.

Gleiche Bauteile in den Figuren der Zeichnung sind mit den gleichen Bezugszeichen versehen.

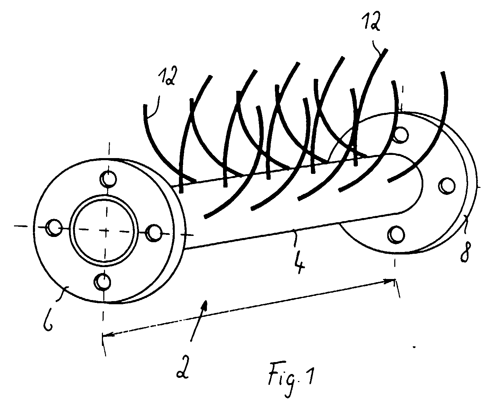

Die Zeichnung (Fig. 1 und 2) zeigt ein Begasungsmodul 2, das ein Rohr 4 aufweist, dessen beide Enden mit Befestigungsflanschen 6, 8 versehen sind. Das Rohr besteht vorzugsweise aus Kunststoff, beispielsweise Polypropylen. Das Rohr 4 weist im Rohrmantel umfangsmäßig verteilt mehrere Bohrungen 10 auf, in denen mit Poren ausgestattete Schlauchmembranen 12 lösbar oder fest angeordnet sind, die sich im wesentlich in eine Richtung - im eingebauten Zustand nach oben - erstrecken. Die Bohrungen 10 für die Schlauchmembranen 12 können auf einer Mantelhälfte des Rohres 4 ausgebildet sein, wie dies in den Fig. 1 und 2 dargestellt ist. Die Schlauchmembranen weisen geschlossene freie Enden 18 auf. Die Bohrungen 10 können in drei Reihen entlang der Oberseite und beidseitig dazu ausgebildet sein, vgl. die Fig. 1 und 2 der Zeichnung. Die freien Enden können verschweißt oder mit einer Überdruckeinrichtung (Ventil) ausgestattet sein.

Die Schlauchmembranen 12 können mittels Schraubadapter 20 in die Bohrungen 10 eingeschraubt sein, vgl. Fig. 2, oder aber auch eingeklebt oder eingeschweißt sein.

Die Schlauchmembranen 12 bestehen vorzugsweise aus einem hydrophoben, flexiblen Kunststoffmaterial, wie Polypropylen, Polyethylen, Polytetrafluorethylen usw., und weisen Poren mit einem Porendurehmesser von ≤ 3 µm, vorzugsweise einem Durchmesser von 0,1 bis 0,2 µm, auf. Die Länge der Schlauchmembranen beträgt ≤ 100 cm, vorzugsweise ≤ 10 cm. Der Innendurchmesser der Schlauchmembranen kann beispielsweise etwa 0,5 mm und der Außendurchmesser etwa 0,8 mm betragen. Pro Begasungsmodul 2 können beispielsweise etwa 30 Schlauchmembranen 12 vorgesehen sein.

Mehrere Begasungsmodule 2, beispielsweise 30 Module, werden zu einem flächigen Begasungsregister 24 aus mehreren Registersegmenten 25 zusammengefaßt, vgl. Fig. 3, wobei die Rohre 4 bzw. die Flansche 6, 8 an Querverteilerrohre 26 eines Druckluft-Rohrsystem 28 angeschlossen werden. Die Querverteilerrohre 26 sind an ein Hauptverteilerrohr 29 angeschlossen, in das ein aufrechtes Zentralrohr 30 führt, in das Druckluft eingegeben wird mit einem Druck bis zu 3 bar, vorzugsweise 0,7-0,8 bar, derart, daß sich ein ausreichender Mikrobläschen-Auspreßdruck ergibt, welcher vorzugsweise 1/10-2/10 größer ist als der hydrostatische Druck beispielsweise eines Belebtschlamm/Abwasser-Beckens und beispielsweise 0,1-0,5 bar betragen kann. Hierzu können Druckluftpumpen mit geringer Leistung eingesetzt werden.

Das Begasungsregister 24 wird auf dem Boden eines Belebungsbeckens einer Kläranlage oder eines Bioreaktors gelegt mit nach oben weisenden, praktisch einen Rasen bildenden Schlauchmembranen 12. Die aus den Poren der Schlauchmembranen 12 austretenden Mikroblasen bilden einen senkrechten Blasenstrom, welcher für eine optimale Zirkulation und Luft/Sauerstoffsättigung beispielsweise eines Belebtschlamm/Abwasser-Gemisches oder sonstigen Feststoff-Flüssigkeitsgemischen oder einer Flüssigkeit, Gewässers (beispielsweise Fischteich) oder dgl. sorgt.

Das beim Zuführen der Druckluft anfallende Kondenswasser wird vorzugsweise zentral über das Hauptverteilerrohr 28 oder das Zentralrohr 30 abgeführt, beispielsweise mit Hilfe der Druckluft ausgeblasen.

## Patentansprüche

1. Vorrichtung zur Begasung von Feststoff-Flüssigkeitsgemischen und Flüssigkeiten, insbesondere von Kläranlagen und Bioreaktoren, mit feinporigen Membranen, über die Luftblasen in das Feststoff-Flüssigkeitsgemisch oder die Flüssigkeiten eingeführt werden, **dadurch gekennzeichnet,** daß die feinporigen Membranen Schlauch- oder Röhrchenmembranen (12) sind, deren eines Ende (18) verschlossen ist.

2. Vorrichtung nach Anspruch 1, **dadurch gekennzeichnet,** daß die Schlauch- oder Röhrchenmembranen (12) aus elastischem, hydrophobem Material bestehen.

3. Vorrichtung nach Anspruch 2, **dadurch gekennzeichnet,** daß die Schlauch- oder Röhrchenmembranen (12) aus Polypropylen, Polyethylen oder Polytetrafluorethylen bestehen.

4. Vorrichtung nach einem der Ansprüche 1 bis 3, **dadurch gekennzeichnet,** daß die Länge der Schlauch- oder Röhrchenmembranen (12) geringer als 100 cm ist.

5. Vorrichtung nach Anspruch 4, **dadurch gekennzeichnet,** daß die Länge geringer als 20 cm ist.

6. Vorrichtung nach Anspruch 1 bis 5**, dadurch gekennzeichnet,** daß der Außendurchmesser der Schlauch- oder Röhrchenmembranen (12) etwa 0,8 mm und der Innendurchmesser etwa 0,5 mm beträgt.

7. Vorrichtung nach einem der vorhergehenden Ansprüche, **dadurch gekennzeichnet**, daß der Porendurchmesser der Schlauch- oder Röhrchenmembranen (12) kleiner als 3 µm ist.

8. Vorrichtung nach Anspruch 7, **dadurch gekennzeichnet,** daß der Porendurehmesser 0,1 bis 0,2 µm beträgt.

9. Vorrichtung nach einem der Ansprüche 1 bis 8, **dadurch gekennzeichnet,** daß mehrere Schlauch- oder Röhrchenmembranen (12) zur Bildung eines Begasungsmodules (2) mit ihrem offenen Ende in Bohrungen (10) des Mantels eines Belüftungsrohres (4) angeordnet sind.

10. Vorrichtung nach Anspruch 9, **dadurch gekennzeichnet,** daß die Schlauch- oder Röhrchenmembranen (12) in eine Richtung - im eingebauten Zustand nach oben - wegragen.

11. Vorrichtung nach Anspruch 9, **dadurch gekennzeichnet,** daß mehrere Begasungsmodule (2) zu einem flächigen Begasungsregister (24) zusammengefaßt sind, wobei die Belüftungsrohre (4) an ein Druckluftrohrsystem (28) angeschlossen sind.

12. Vorrichtung nach einem der vorhergehenden Ansprüche, **dadurch gekennzeichnet**, daß der Mikrobläschen-Auspreßdruck 1/10 - 1/20 höher ist als der hydrostatische Druck in einem Behälter, in dem die Schlauch- oder Röhrchenmembranen (12) angeordnet sind.
